# EUROPEAN PATENT APPLICATION

(11) **EP 4 345 710 A1**
(43) Date of publication of application: **03.04.2024**
(21) Application number: 23196205.1
(22) Date of filing: 08.09.2023
(51) Int. Cl.: G06Q 10/0631, G06Q 10/08

(54) **METHODS AND SYSTEMS FOR MANAGEMENT OF EVENTS AND DISRUPTIONS**

(30) Priority: 29.09.2022 US 202263377600 P; 03.03.2023 US 202318178449
(71) Applicant: Honeywell International Inc., Charlotte, NC 28202 (US)
(72) Inventor: KHAN, Kalimulla, Charlotte, 28202 (US); JAYATHIRTHA, Srihari, Charlotte, 28202 (US); LINDSEY, Wade, Charlotte, 28202 (US); RYSKO, Garrett, Charlotte, 28202 (US)
(74) Representative: Haseltine Lake Kempner LLP

(57) **Abstract**

A method is provided for event and disruption management in a workplace environment. The method comprises retrieving a set of tasks to be completed in a predetermined period, identifying a set of triggering events that may disrupt each task of the set of set of tasks; when a triggering event of the set of triggering events occurs, initiating an event resolution, wherein the event resolution comprises one or more of: sending a notification of the triggering event to at least one of the plurality of worker computing devices relating to at least one worker affected by the triggering event; and sending the notification of the triggering event to at least one device associated with at least one supervisor affected by the triggering event.

## Description

### RELATED APPLICATION

This application claims the benefit of priority to U.S. Provisional Patent Application No. 63/377,600, filed September 29, 2022, the entirety of which is hereby incorporated by reference.

### TECHNICAL FIELD

The present disclosure relates generally to methods and systems to optimize operations in a workplace such as a warehouse, distribution center, airport ground operations, and retail generally.

### BACKGROUND

Events and disruptions that require reorganizing and reconfiguring planned activities are inevitable in any large-scale business operational environment. If not managed properly, such events and disruptions may be detrimental to the success of routine operations, and result in large scale idle time, heavy costs, incidents involving workers and/or customers, and an overall reduction in operational efficiency.

Successful operations could benefit from a mechanism to anticipate events and disruptions, safely and quickly manage them with minimal impact to the operations, and to continuously learn from the events and disruptions and to enhance the processes of response and management. Occurrences that are generally referred to as events include any unplanned or unintended incident that affects the ability to compete a task already in progress. Examples of events include, but are not limited to, such incidents as accidents, power outages, and equipment breakdown. Disruptions are generally to be interpreted as reductions in the availability of resources, labor, equipment, or other necessary tools for the completion of a task in the operational environment. It is desired to predict and detect both events and disruptions to maintain efficient operation of the workplace environment.

Events and incidents may often result in disruptions to ongoing and scheduled tasks, and the logistics involved in implementation of these tasks typically are labor intensive, requiring machinery, tools, and transportation to be scheduled well in advance. Any disruption in resource availability for the tasks may have a chain reaction in the day-to-day operations causing delays, down time and overall loss of productivity and profitability. Task handlers or supervisors may account for these disruptions by adding buffers in the scheduling, task execution time, and resource planning. However, consistently adding buffers that ultimately are not required makes the operations inefficient. Furthermore, tactical decisions taken in case of a disruption are often ad hoc and may impact the operations in unintended ways that further constitute inefficiencies.

Therefore there is proposed a system for event detection and management and disruption detection and management integrated with a task management module to set up automated responses to events and disruptions. The system responds to incidents as reported by connected devices and generates and manages the appropriate actions that are necessary to be performed for any event or disruption. The actions may include informing relevant stakeholders, halting effected operations, creating tasks or service requests to address the event, among others. This system records various aspects of the events and responses taken to maintain a log and to provide insights to the operations managers on most common events or causes for events. Furthermore, the system provides a disruption management playbook that analyzes the impact of a disruption and provides a mitigation plan for efficiently addressing the disruptions.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY

A method is provided for event management in a workplace environment. The method comprises connecting a gateway device with a data ingestion pipeline, the data ingestion pipeline being in communication with a plurality of worker computing devices and a plurality of sensor devices, the worker computing devices each relating to one or more workers of a plurality of workers; retrieving a set of tasks to be completed in a predetermined period, identifying a set of triggering events that may disrupt each task of the set of set of tasks; when a triggering event of the set of triggering events occurs, initiating an event resolution, wherein the event resolution comprises one or more of: sending a notification of the triggering event to at least one of the plurality of worker computing devices relating to at least one worker affected by the triggering event; and sending the notification of the triggering event to at least one device associated with at least one supervisor affected by the triggering event.

A further method is provided for disruption management in the workplace environment. This method comprises connecting a gateway device with a data ingestion pipeline, the data ingestion pipeline being in communication with a plurality of worker computing devices and a plurality of sensor devices, the worker computing devices each relating to one or more workers of a plurality of workers; retrieving a set of tasks to be completed in a predetermined period; retrieving a disruption data model, wherein the disruption data model is comprised of historical data correlating a plurality of disruptions with the set of tasks, and an impact assessment of each of the plurality of disruptions for each task of the set of tasks; retrieving a cost model comprised of a cost assessment of each of the plurality of disruptions for each task of the set of tasks; when a disruption of one of the plurality of disruptions occurs, generating a mitigation response based on the disruption data model and cost model; wherein the mitigation response comprises at least one of: sending a notification of the mitigation response to at least one of the plurality of worker computing devices relating to at least one worker affected by the disruption; and sending the notification of the mitigation response to at least one device associated with at least one supervisor affected by the disruption.

A non-transitory computer-readable medium is provided storing instructions to perform the above methods, including connecting a gateway device with a data ingestion pipeline, the data ingestion pipeline being in communication with a plurality of worker computing devices and a plurality of sensor devices, the worker computing devices each relating to one or more workers of a plurality of workers; retrieving a set of tasks to be completed in a predetermined period, identifying a set of triggering events that may disrupt each task of the set of set of tasks; when a triggering event of the set of triggering events occurs, initiating an event resolution, wherein the event resolution comprises one or more of: sending a notification of the triggering event to at least one of the plurality of worker computing devices relating to at least one worker affected by the triggering event; and sending the notification of the triggering event to at least one device associated with at least one supervisor affected by the triggering event.

To the accomplishment of the foregoing and related ends, certain illustrative aspects are described herein in connection with the following description and the appended drawings, including the appendix attached to this disclosure including other examples of the herein disclosed solution and which is incorporated by reference in its entirety as if set forth verbatim here. These aspects are indicative, however, of but a few of the various ways in which the principles of the claimed subject matter may be employed and the claimed subject matter is intended to include all such aspects and their equivalents. Other advantages and novel features may become apparent from the following detailed description when considered in conjunction with the drawings.

### BRIEF DESCRIPTION OF THE DRAWINGS

Embodiments of the disclosure will now be described, by way of example only, with reference to the accompanying drawings in which:
FIG. 1 is a schematic diagram illustrating an example environment implementing methods and systems of this disclosure.
FIG. 2A is a diagram of architecture of a connected warehouse system of this disclosure.
FIG. 2B is a diagram of a layout of a warehouse with the connected warehouse system of this disclosure.
FIG. 3 is a flowchart illustrating a method for optimizing operations of a job site.
FIG. 4 depicts an embodiment of an event resolution matrix interface.
FIG. 5 depicts an example user interface of an event trigger resolution.
FIG. 6 is a flow diagram of an event management system.
FIG. 7 is an example user interface of an event management dashboard.
FIG. 8 is a flow diagram of a disruption management system.
FIG. 9 depicts an example user interface of a disruption management playbook.
FIG. 10 depicts an example user interface of a disruption prediction model.
FIG. 11 depicts an example user interface dashboard in a first mode, according to an exemplary embodiment.
FIG. 12 is a flowchart illustrating a method for managing unplanned tasks, according to an exemplary embodiment.
FIG. 13 is a diagram of architecture of a connected warehouse system of this disclosure.
FIG. 14 is a diagram of architecture of a connected warehouse system of this disclosure.
FIG. 15 depicts a schematic block diagram of a framework of a platform of a connected warehouse system.
FIG. 16A depicts an exemplary diagram of a data flow of a connected warehouse, according to one or more embodiments.
FIG. 16B depicts an exemplary diagram of a data flow of a connected warehouse, according to one or more embodiments.
FIG. 17 illustrates an exemplary device in which one or more embodiments may be implemented.

### DETAILED DESCRIPTION

The following embodiments describe systems and methods for facilitating a connected warehouse as between employees, managers, and other users. In particular, the following embodiments are directed to systems and methods for anticipating events and disruptions, safely and quickly managing them with minimal impact to the operations, and continuously learning from the events and disruptions to enhance the processes of response and management.

A dynamic and decentralized technique for implementing a connected warehouse system is provided. An embodiment or implementation described herein as "dynamic" is intended to reflect or indicate that the embodiment(s) is or can be marked by continuous and productive activity or change, though not necessarily constantly changing. The system and corresponding techniques facilitate communications within one or more warehouses, between users (e.g., worker, teams of workers, manager, etc.), and between warehouses, third parties associated therewith, and data centers. Such communications may be facilitated by edge systems and gateway systems. The edge and gateway systems may be located in warehouses (i.e., on-site) as embedded or fixed systems and/or other user devices such as tablet PCs and mobile phones (e.g., devices controlled by or in communication with an operations manager, etc.). Each edge system may be coupled to a warehouse system from which warehouse operations data may be collected, and in communication with other edge systems and gateway systems. Each gateway system may be in communication with warehouse operation systems and edge systems of the warehouse in which the gateway system is resident (e.g., with the operations manager), and may also be in communication with gateway systems located in other warehouses, all or some of which may provide data to the gateway system. By facilitating communication with gateway systems located in other warehouses, the gateway system may enable exchange of data among edge systems installed in different warehouses. Independent user computing devices, such as tablet PCs and mobile phones, may be directly coupled to and/or in communication with the edge systems and/or gateway systems, to request, filter, view, and/or analyze data.

Hardware for all or some of the edge systems and gateway systems may be installed in warehouses. Therefore, software may be installed on the corresponding warehouse hardware. The software implemented in the edge systems and gateway systems may comprise computer-executable code for performing various data functions, including but not limited to, data request, data query, data retrieval, data transmission, and data analytics. The edge systems and gateway systems each identify source(s) of relevant data, and request that data be provided dynamically (as needed) or statically (all the time) from the identified source(s), such as from other edge systems coupled to warehouse systems in the warehouse or other warehouses, gateway systems in the warehouse or other warehouses, decentralized system(s) such as cloud computing center(s), and centralized system(s) such as dedicated server farms. The decentralized system(s) and centralized system(s) may be owned by the operators of the warehouses, or by a third party such as a government or a commercial entity.

Each edge system in a warehouse may be coupled to a sensor of a corresponding warehouse system in the same warehouse, enabling data captured by the sensor to be provided directly to the edge system. Also, a gateway system in a warehouse may be coupled to one or more sensors of warehouse systems in the same warehouse, enabling data captured by the one or more sensors to be provided directly to the gateway system. In another embodiment, each edge system in a warehouse may be coupled to warehouse system of a corresponding warehouse system in the same warehouse. Also, a gateway system in a warehouse may be coupled to warehouse system machines of warehouse systems in the same warehouse. In some aspects, warehouse system machines may be configured to collect data from the coupled one or more sensors, perform computations and/or analysis of the collected data, store the collected and/or analyzed data in memory, and provide the collected and/or analyzed data to one or more connected edge systems and/or gateway system. In some embodiments, the warehouse system may not be implemented, or may not be coupled to the one or more sensors of the warehouse system. If the warehouse system machine is not implemented or not coupled to the one or more sensors, data captured by the one or more sensors may be provided directly to the one or more connected edge systems and/or gateway system.

Each warehouse system may be in communication with, through an edge system or not, a gateway system. Edge systems in a warehouse may be in direct communication with one another. For example, any data retained by one edge system may be transmitted directly to another edge system within the same warehouse, without a gateway system acting as an intermediary. In another embodiment, an edge system may send to or receive data from another edge system located in the same warehouse through a gateway system. The communication between the edge systems and the communication between the edge systems and the gateway system may be through a wired or wireless connection.

A gateway system of a warehouse may be in communication with gateway systems of other warehouses. Through this communication path, an edge system or a gateway system of a warehouse may transmit data to and obtain data from edge systems or gateway systems of other warehouses. The communication path between gateway systems of different warehouses may be through satellite communications (e.g., SATCOM), cellular networks, Wi-Fi (e.g., IEEE 802.11 compliant), WiMAx (e.g., AeroMACS), optical fiber, and/or air-to-ground (ATG) network, and/or any other communication links now known or later developed. An edge system in a warehouse may communicate with another edge system in a different warehouse via gateway systems of the respective warehouses. For example, an edge system in a warehouse may transmit data to one or more edge systems in other warehouses via the gateway systems of the respective warehouses communicating over the communication path discussed above.

Each edge system and gateway system may comprise state machines, such as processor(s) coupled to memory. Both the edge systems and the gateway systems may be configured with a common operating system to support portable, system-wide edge software implementations. In other words, each of the edge systems and the gateway systems may be equipped with standard software to facilitate inter-operability among the edge systems and the gateway systems. In the discussion below, such software will be referred to as edge software. The edge software may enable each edge system or gateway system to perform various functions listed below (non-exhaustive) to enable data analysis and data exchange among the various systems illustrated herein (e.g., edge systems, gateway systems, warehouse operations centers, remote systems):
- Filter and analyze real-time and stored data collected from other edge systems, warehouse systems, gateway systems, and/or operations center(s), and generate events based on the analysis;
- Identify dynamic (i.e., as needed) and static (i.e., all the time) data transmission targets (e.g., edge systems within the same warehouse, edge systems in other warehouses, operations center(s));
- Transmit data over an Internet connection to the operations centers;
- Provide a request/response interface for other edge/gateway systems, warehouse borne computer systems, operations centers, and remote systems connected over wired/wireless networks or Internet to query the stored data and to dynamically select/change data filters;
- Use request/response interfaces provided by other edge systems, gateway systems, and operations centers connected over wired/wireless networks or Internet to obtain data and to dynamically select/change data filters;
- Receive events from other edge systems, gateway systems, and operations centers; and
- Specify and communicate generic purposes (i.e., types of data the edge/gateway system is interested in) to other edge systems, gateway systems, and operations centers.

Each edge system or gateway system may autonomously select and deliver data to one or more transmission targets, which may be other edge systems in the same warehouse, edge systems in other warehouses, gateway system in the same warehouse, gateway systems in other warehouses, or operations center(s). Each of the receiving edge or gateway systems (i.e., transmission targets) may be configured to filter the received data using a pre-defined filter, overriding the autonomous determination made by the edge system transmitting the data. In some embodiment, each receiving edge or gateway system may notify the other systems, in advance of the data transmission, of the types of data and/or analysis the receiving system wants to receive (i.e., generic "purposes"). Also, each edge or gateway system may maintain a list including static data transmission targets (transmission targets that always need the data) and dynamic data transmission targets (transmission targets that need the data on as-needed basis).

A gateway system of a warehouse may also be in communication with one or more operations centers, which may be located remotely from the warehouse (i.e., off-site). In some embodiments, however, the operations center(s) may be located on-site at the warehouse. Each of the warehouse systems of this disclosure may be implemented in a dedicated location, such as a server system, or may be implemented in a decentralized manner, for example, as part of a cloud system. The communication path between the gateway systems and the operations center(s) may be through satellite communications (e.g., SATCOM), cellular networks, Wi-Fi (e.g., IEEE 802.11 compliant), WiMAx (e.g., AeroMACS), optical fiber, and/or air-to-ground (ATG) network, and/or any other communication links now known or later developed.

Subject matter will now be described more fully hereinafter with reference to the accompanying drawings, which form a part hereof, and which show, by way of illustration, specific exemplary embodiments. An embodiment or implementation described herein as "exemplary" is not to be construed as preferred or advantageous, for example, over other embodiments or implementations; rather, it is intended reflect or indicate that the embodiment(s) is/are "example" embodiment(s). Subject matter be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). Furthermore, the method presented in the drawings and the specification is not to be construed as limiting the order in which the individual steps may be performed. The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" or "in some embodiments" as used herein does not necessarily refer to a different embodiment. It is intended, for example, that claimed subject matter include combinations of exemplary embodiments in whole or in part.

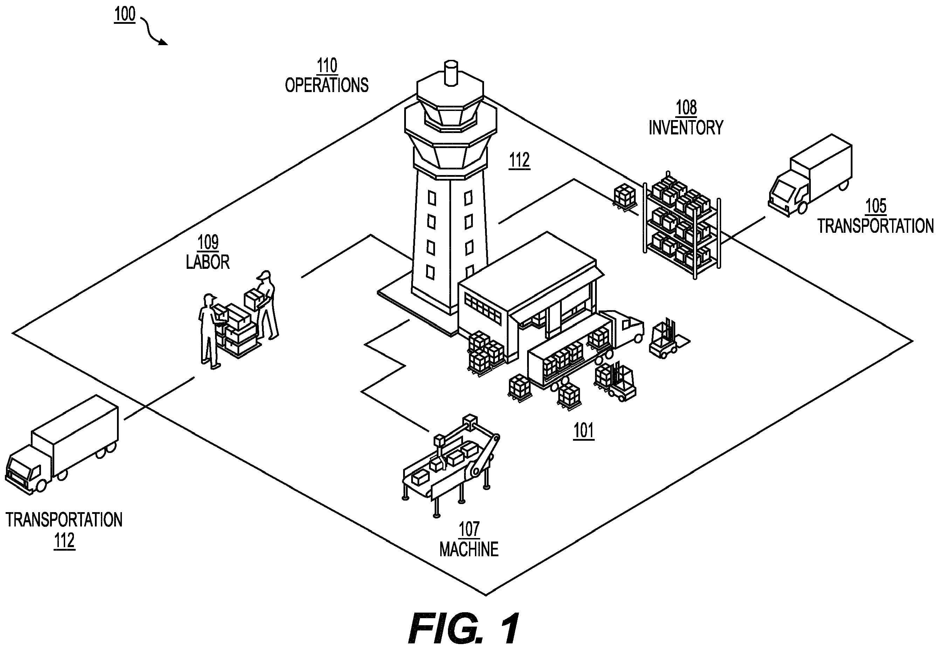

FIG. 1 illustrates an exemplary warehouse and/or distribution center environment 100 with certain components, including delivery transportation 105 (e.g., supply chain delivery truck) to load into inventory 108. An operational control tower 112 may monitor and/or otherwise control operations 110 within environment 100. Operations 110 can be performed and/or managed by labor 109. Operations 110 can include loading 101 and assembly machines 107. Once assembled, packaged, and otherwise processed for distribution, transportation 116 (e.g., a freight truck) can be loaded by labor 109 and depart for its subsequent destination. The environment 100 is configured to optimize worker performance by selectively scheduling and assigning tasks and worker equipment, as discussed more particularly below. The term "worker" can be understood as a human, a non-human animal (e.g., a trained animal such as a dog) or any other asset that performs tasks at a job site (e.g., a robotic device).

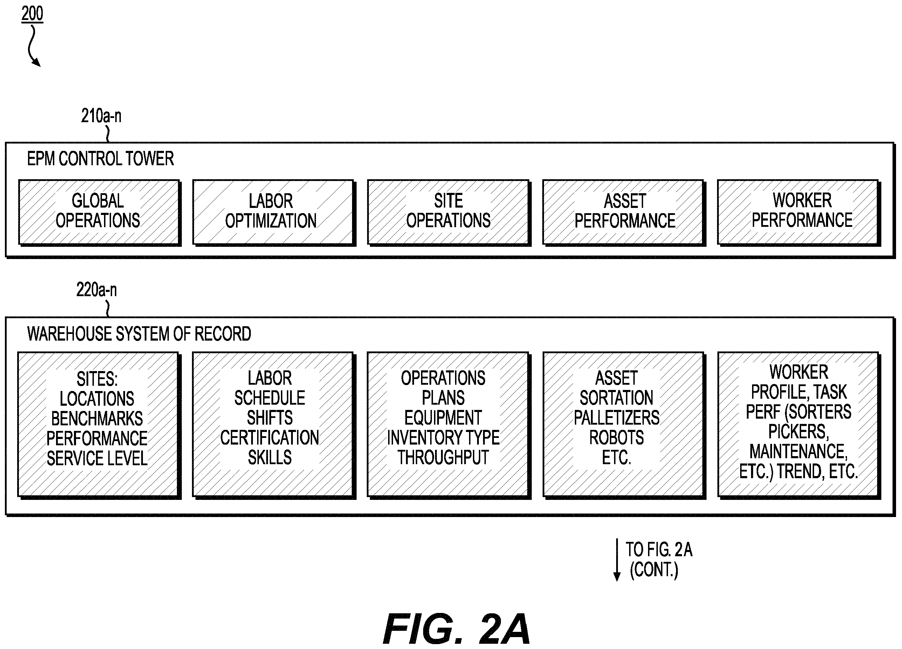

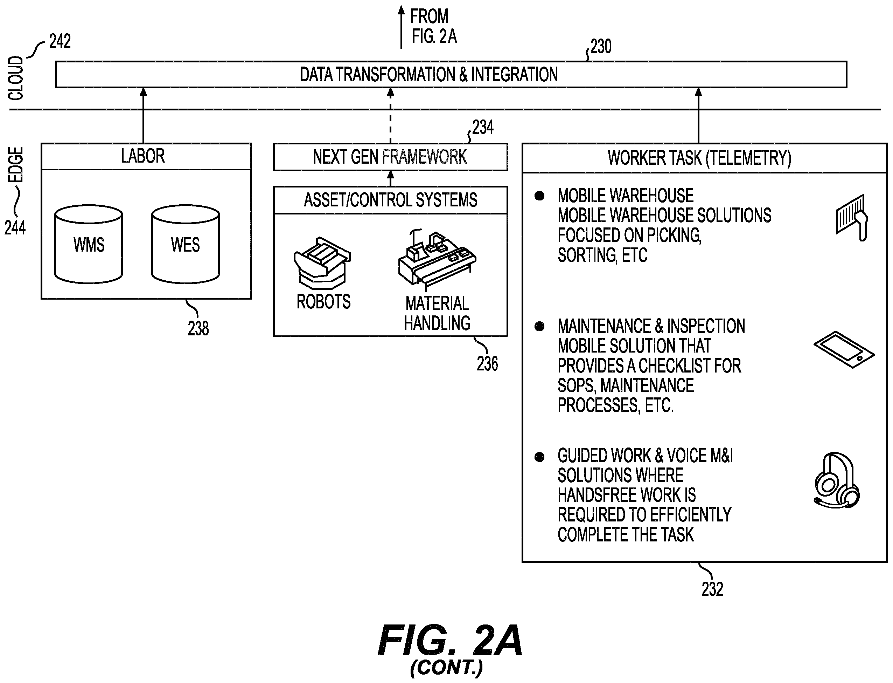

FIG. 2A is a diagram of architecture associated with of a connected warehouse system 200 of this disclosure. System 200 can include enterprise performance management (EPM) control tower 210a-n, including components and databases such as but not limited to global operations, labor optimization, site operations, asset performance, and worker performance. System 200 can also include a networked warehouse system of record 220a-n, including components and databases such as but not limited to sites (e.g., locations, benchmarks, performance service level, etc.), labor (e.g., schedule, shifts, certification, skills, etc.), operations (e.g., plans, equipment, inventory type, throughput, etc.), assets (e.g., sortation, palletizers, robots, etc.), and workers (e.g., trends, profiles, task performance such as sorters, pickers, maintenance works, etc.). EPM control tower 210a-n and networked warehouse system of record 220a-n can reside in a cloud based computing system 242 (e.g., a cloud computing network, one or more remote servers) and be communicatively coupled to data transformation and integration layer 230.

System 242 may be communicatively coupled to an edge computing system 244. System 244 can be an edge computing system or node with a dedicated unit onsite at the work site (e.g., factory, distribution center, warehouse, etc.). System 244 can be configured to process data and information from labor database 238, asset control systems 236 (e.g., components related to control of robots, material handling, etc.) and worker tasks database 232. Database 238 can include databases for warehouse management services (WMS) and warehouse execution systems (WES).

Database 232 can include one or more telemetry components operatively coupled to features of distribution center environment 100 so as to process and transmit control information generated subscribing to incoming control information for consumption by one or more controllers of system 240 over a network. Database 232 can be configured for data validation and modification for incoming telemetry or attributes before saving to the database; copy telemetry or attributes from devices to related assets so you can aggregate telemetry, e.g., data from multiple subsystems can be aggregated in related asset; create/update/clear alarms based on defined conditions; trigger actions based on edge life-cycle events, e.g., create alerts if device is online/offline; load additional data required for processing, e.g., load threshold value for a device that is defined in a user, device, and/or employee attribute; raise alarms/alerts when complex event occurs and use attributes of other entities inside email template; and/or consider user preferences during event processing. In some aspects, messages transmitted from database 232, such as triggers and/or alerts, can be configured for transmitting information to an end user (e.g., site lead, crew in the control tower, etc.) for optimization purposes. System 200 can also be configured to detect near accidents or other misses to build a trend model for early detection of anomalies before faults or malfunctions occur increasing safety. In some aspects, the trend model can perform statistical analysis of worker trends including assigned tasks, event datasets to derive insights on worker performance considering the nature of work, skillset, criticality, labor intensity, etc. In some aspects, the trend model can classify data on a variety of key performance parameters to generate reports, dashboards, and insights that can be presented to users. In some aspects, the trend model can determine benchmarks based on statistics for type of task, skill set, geographical location, industry etc. to enable performance-based assessment, incentives and target setting for worker operations.

Database 232 can include mobile warehouse solutions focused on picking, sorting, and other such tasks. Database 232 can include maintenance and inspection components configured to provide one or more checklists with standard operating procedures (SOPs), maintenance processes, and the like. Database 232 can include guided work and voice maintenance and inspection components configured where hands-free work is required by employees to complete a task.

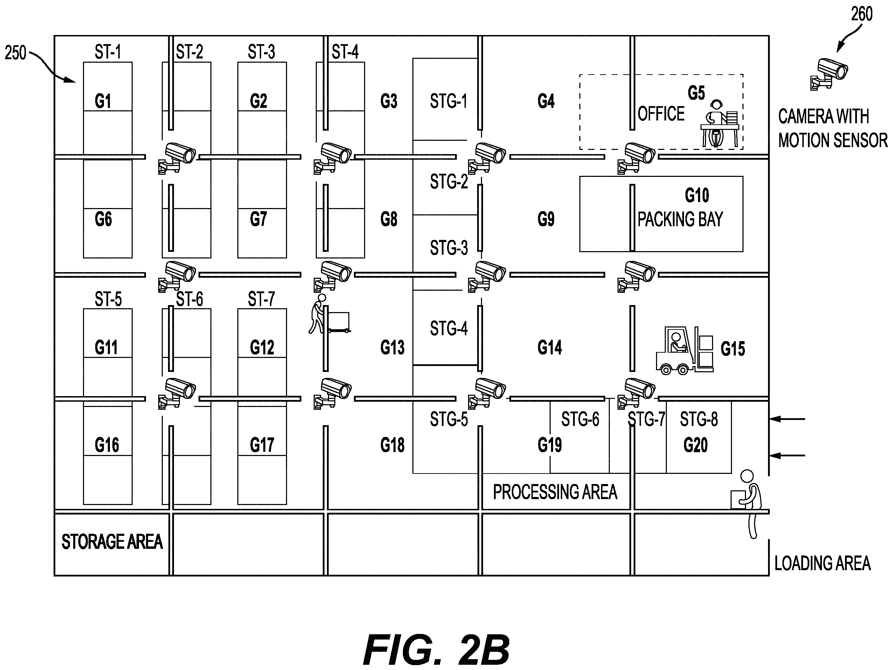

FIG. 2B is a diagram of layout of a warehouse with the connected warehouse system described in FIG. 2A. The warehouse includes a job site 250 that may comprise, for example, a storage area, a processing area, a loading area, a packing bay, and an office. Workers are generally situated in the storage area, the processing area, the loading area, or the packing bay, depending on their assigned tasks. The warehouse system 200 described in FIG. 2A may be used to monitor the warehouse using a variety of sources including voice input, scanning, device usage, network activity, location-based events, visual recognition events. The input from these sources may be used to determine the occurrence of an event or disruption.

The system 200 employs a plurality of methods to track the real-time progress of the tasks. The system interfaces with external systems to track the engagement levels of the workers on a real-time basis at any given time. This includes tracking specific task scheduled start times, the progress of the task after it has commenced, and a completion of the task. The warehouse layout may be equipped with motion sensor cameras 260 at strategic locations to monitor the movement of workers and materials in the warehouse. Each task is broken down to various stages and each stage associated with desirable time for completion. The time duration of each stage would be based on historic performance of workers, distance or level of effort involved and company or regulatory practices or policies. The motion sensing camera's capture the worker and material movement and automatically compute the status of the task based on the position of the worker and the materials. The worker may also be provided with voice or PED based application that tracks and collects information directly from the worker on the progress made.

Because the system 200 also interfaces with external systems for real-time tracking of other events, anomalies or failures in the business environment which potentially impact the productivity of the worker, the system 200 may include an algorithm to identify idle or unproductive workers and compare to events or disruptions that may have had an impact their tasks. If there is no event identified that may explain a worker's idleness, a communication may be triggered to the worker to identify whether there has been a localized or personal incident, such as a medical event or fatigue.

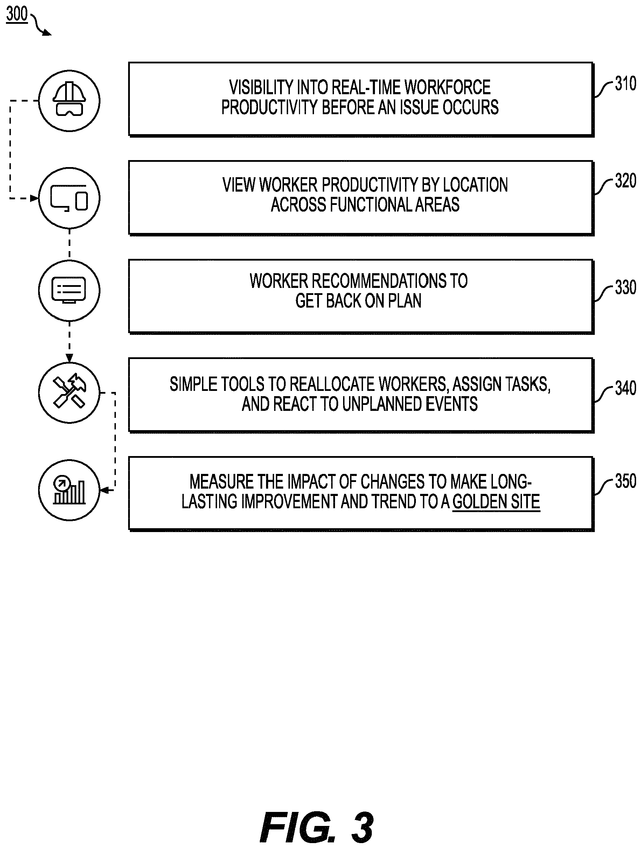

FIG. 3 is a flowchart illustrating a method 300 for optimizing operations of a job site. In step 310, the method can include providing visibility into real-time workforce productivity before an issue occurs. In step 320, the method can include viewing worker productivity by location across functional areas. In step 330, the method can include providing worker recommendations to return to a worker plan. In step 340, the method can include providing tools to reallocate workers, assignment tasks, react to unplanned events or disturbances in an event resolution or disruption mitigation plan. In step 350, the method can include measuring the impact of changes to make persistent improvement via a learning model and event or disturbance log and trend to an optimized job site (e.g., a golden site).

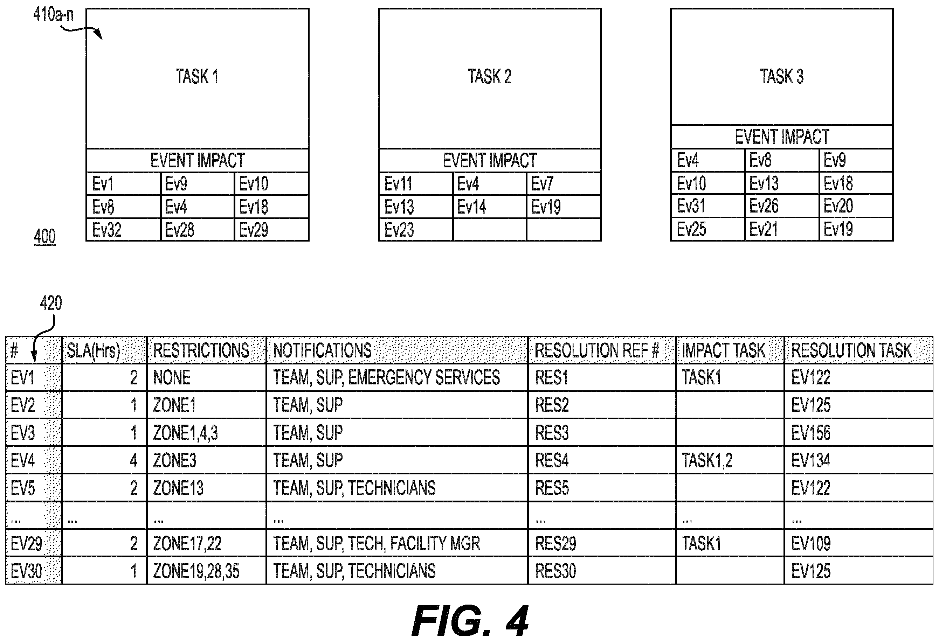

FIG. 4 depicts an example of an event resolution matrix 400 used by the system to react to unplanned events and return the warehouse workers to a worker plan. As depicted in matrices 410a-n, a series of tasks are provided for completion at the warehouse, and each task is tagged with a set of events that could have an impact on the task. The impacting events may be configured in the system by subject matter experts or developed by an intelligent system based on historical data on events and their consequences to the type of tasks. An event resolution matrix contains all the information related to the set of activities to be performed when an event is triggered, as shown at 420, such as the personnel to be notified, impacted areas in the facility, tasks impacted, resolution time expected and standard resolution task to address the event. These response are recorded in the resolution matrix.

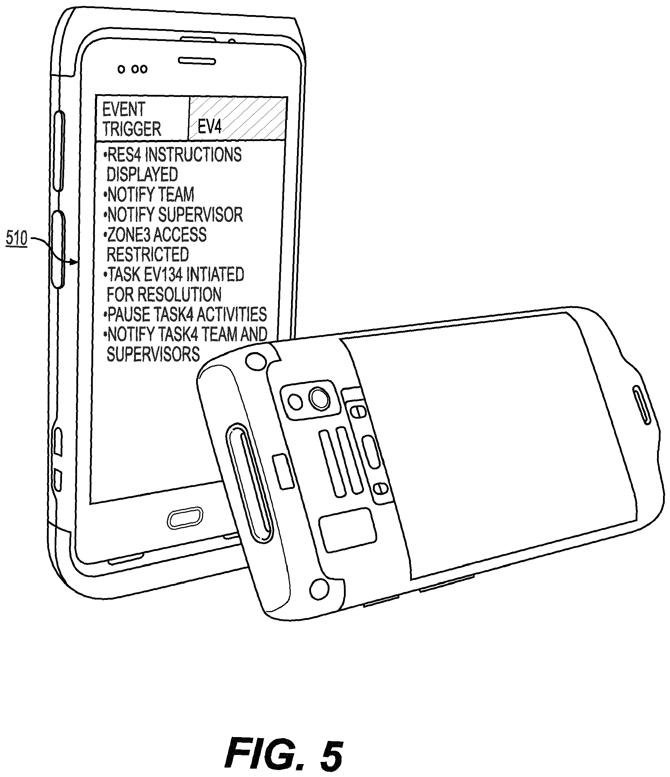

As shown in FIG. 5, when an event is triggered, a notification 510 may be sent to the devices of the personnel that are impacted by the event and/or the personnel that would be required to respond to the event. The notification 510 includes an event trigger resolution, including information about teams of workers and supervisors to be notified, zones to be restricted, tasks to be initiated, and tasks to be paused, among others. For example, if the event is a spill in a given zone of the warehouse, teams that have tasks that require access to that zone will be notified, as will the supervisors associated with that task and/or with that zone. The tasks that required access to that zone, such as stocking inventory in the zone, will be paused, with notifications of the task being paused pushed to all workers and supervisors associated with that task. Access to that zone would be similarly restricted by sending a notification to all workers to that effect. Then tasks will be created to resolve the event, such as a task for restricting general access to the zone, and a task for cleaning up the skill. These tasks may be automatically pushed by the system to the appropriate workers based on a decision making algorithm, or an appropriate supervisor may be prompted to create and assign the task. When the event is resolved, all relevant teams and supervisors will likewise be notified.

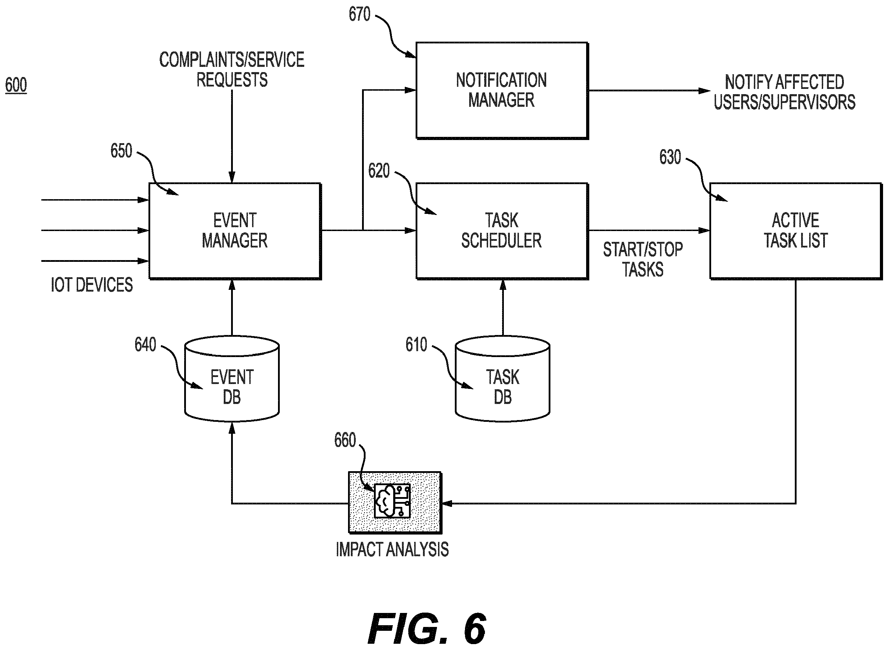

FIG. 6 demonstrates the processes of the event management system 600 in diagram form. Events may be triggered by standard mechanisms like service requests and alarms from IoT devices within the warehouse and sent to the event manager 650. The proposed system identifies the type of event triggered by referencing an event database 640 that has stored within it historical events that have been logged. If the event registered by the service request or the IoT device is not in the event database 640, one may manually be created using an event template. Notifications required are generated in a notification manager 670 and sent to the appropriate teams and supervisors. Based on the resolution matrix described above, the event manager 650 commences the activities to resolve and/or address the event. This includes scheduling a task or set of tasks required to resolve the event by retrieving the required tasks from task database 610 and inserting the selected tasks to task scheduler 620 to create the tasks and add them to the active task list 620 and push the tasks to the user devices of relevant parties, the connectivity of the user devices being described in further detail below.

During the process, the system logs key information related to the event and execution of the resolution task along with consequences such as cost of resolution and impact to schedule in an impact analysis step at 660. Logging this information is used to build a knowledge base for refinement of the resolution matrix for reference upon the next occurrence of an event and to present the probabilities of a future event.

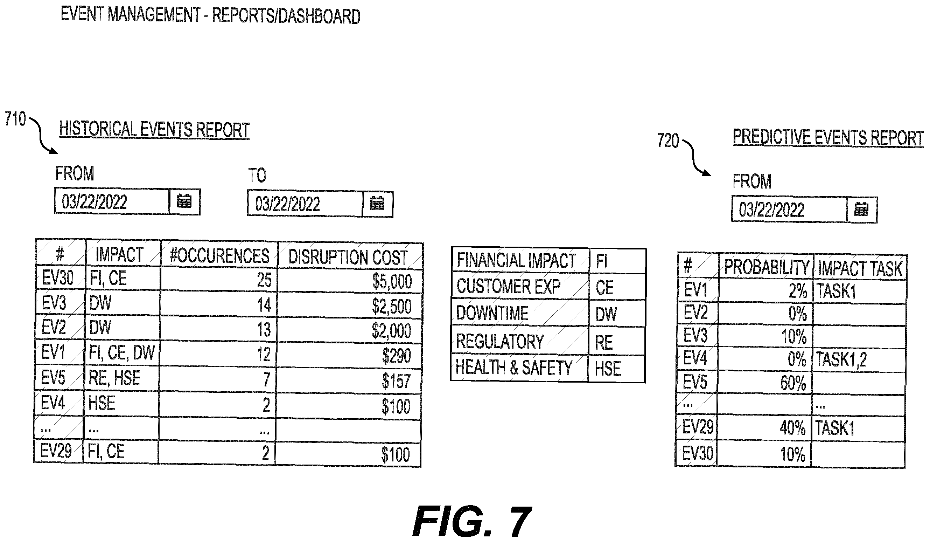

In FIG. 7, a report dashboard is shown that can be accessed on a user device that presents a historical events report 710 and a predictive events report 720. The historical events report 710 presents information about logged events and their impacts for informational purposes. In an exemplary embodiment, the report includes a field for a user to input start and end dates for the report, and presents the types of events that have occurred, how many times the event has occurred, costs associated with the event, and the impacts that resulted. The impacts may include financial impacts, impacts to customer experience, impacts that resulted in downtime, impacts that resulted in potential regulatory violations, and impacts that included health and safety hazards or violations.

The predictive events report 720 uses this historical information to prognosticate about potential future events such that a user or supervisor may either take actions to avoid the event, or if evasive action is not available, take actions to prepare for the event. Based on historical data, the predictive events report 720 provides the probability of an event occurring on a given date or in a given date range, and the tasks that would be impacted by the event. A user may use this information to avoid the tasks if a disruptive event is likely to occur, or to prepare for the event to occur to resolve it more efficiently.

Events and incidents may often result in disruptions to ongoing and scheduled tasks, and the logistics involved in implementation of these tasks typically are labor intensive, requiring machinery, tools, and transportation to be scheduled well in advance. Any disruption in resource availability for the tasks may have a chain reaction in the day-to-day operations causing delays, down time and overall loss of productivity and profitability. Task handlers or supervisors may account for these disruptions by adding buffers in the scheduling, task execution time, and resource planning, making the operations in-efficient. Tactical decisions taken in case of a disruption are usually adhoc and could end up impacting the operations more than they should.

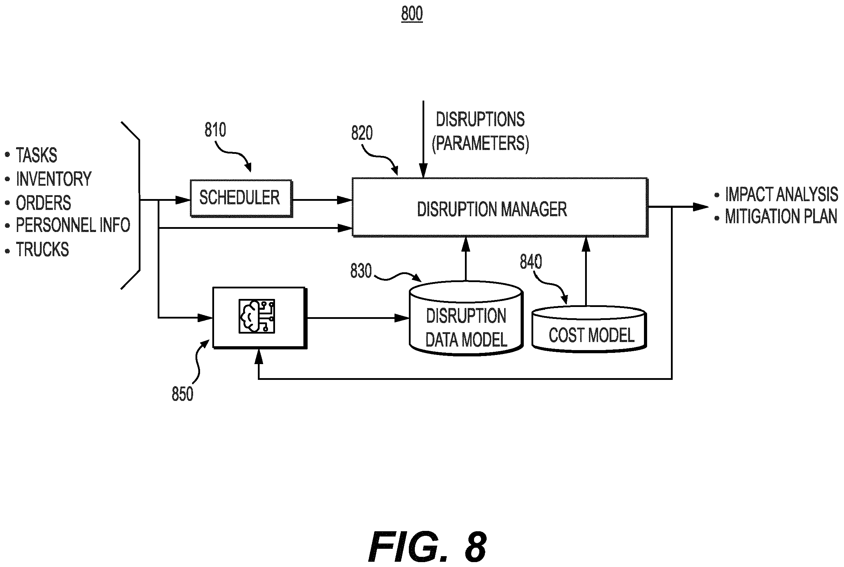

FIG. 8 depicts a flow diagram of a disruption management system 800developed to provide a disruption management playbook to model disruptions as they impact resource availability and to predict the likelihood of future disruptions to routine operations. In one exemplary embodiment in a warehouse environment, the disruption management system 800 takes as inputs: tasks to be performed, inventory required for the tasks to be performed, inventory available, orders for inventory, information about the personnel available to perform and/or supervise the tasks, and transportation available to transport the inventory. All of these inputs are sent to a task scheduler 810 in the system, and also fed to a disruption manager 820.

If a disruption occurs, the system 800 is notified of the disruption via a worker device or other IoT device as described, e.g., in FIG. 2, and searches the disruption data model 830 for historical information related to the specific type of disruption and its possible resolutions. It then retrieves information regarding the cost of any potential resolutions from cost model 840. Based on the disruption data and the cost model, the disruption manager performs a mitigation plan to choose a resolution that best mitigates the disruption. The impact assessment and the mitigation may be done based on various factors including the criticality of the task, cost of delays to the operations, downstream impact, efficient labor, and material utilization. These factors can be configured by the user based on the priorities of the operations or facility. Learning model 850 stores information about each disruption and its resolutions and mitigations to make the disruption data model 830 more robust and to provide the scheduler 810 with further information when scheduling future tasks.

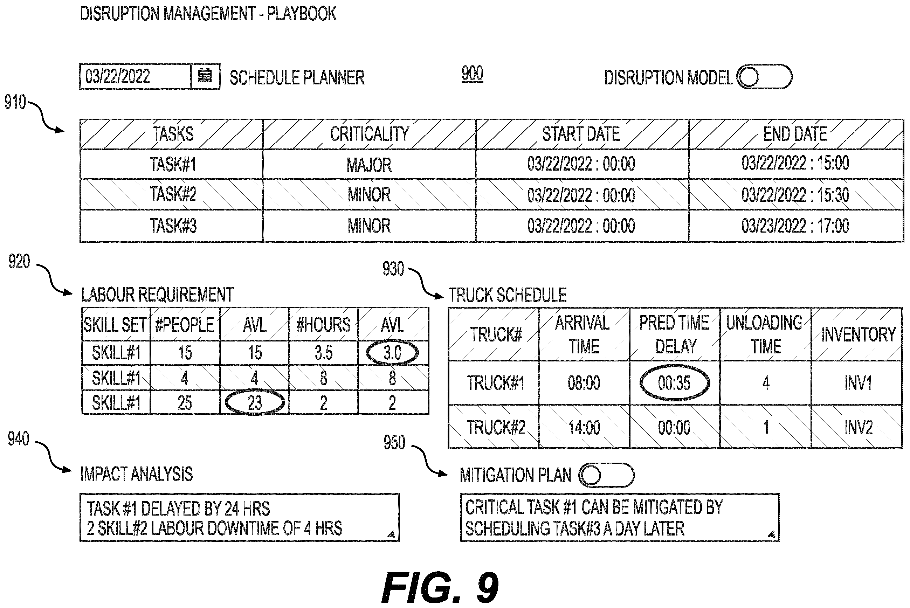

FIG. 9 depicts an exemplary disruption management playbook 900 with a schedule of tasks 910 for a given day, and an accounting of the labor requirement 920 and truck schedule 930 for the day's tasks. Shown circled are three instances of disruptions to the day's scheduled tasks. First, the workers with a specified skill set that were required to be scheduled for 3.5 hours will only be available for 3 hours. Second, of the 25 people required to be available for 2 hours with a given skillset, only 23 have arrived for their shift. And finally, a truck scheduled to arrive at 8:00 with specified inventory has reported that it will be 35 minutes late. As described above, the disruption management system 800 accesses the tasks of the day from the scheduler 810 and then assess the impact of the disruption using the disruption data model 830 and cost model 840. This then outputs the impact analysis and 940 and mitigation plan 950 as shown in FIG. 9. In the exemplary embodiment, the playbook 900 notifies the task manager or supervisor that the impact is analyzed such that task 1 will be delayed by 24 hours and that two workers will experience a downtime of four hours.

The disruption management system also has a rule-based system on mitigations that provides possible mitigations for the disruptions. The rule-base can be based on criticality of tasks, cost, historical data, company/industry policy and other factors. Because task 1 was indicated as a critical task, the disruption management playbook also offers the mitigation plan of scheduling task 3, set to minor criticality, a day later to ensure that critical task 1 is completed. The supervisor or task planner has the option to accept or refuse the mitigation plan by a toggle switch. If the mitigation plan is accepted, the learning model 850 incorporates the decision into the scheduler 810 and pushes the resulting tasks and schedules to the devices of the affected workers and supervisors.

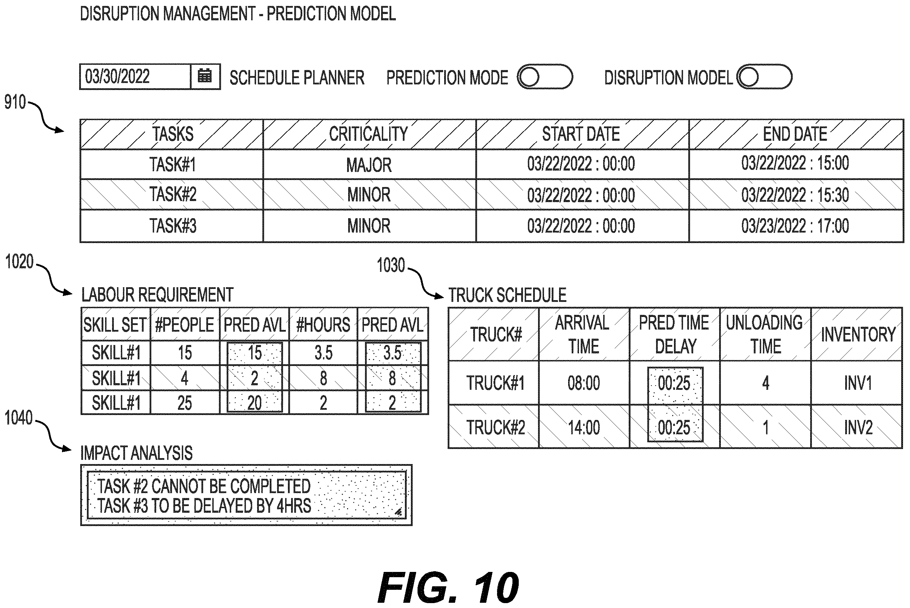

In addition to a disruption management playbook 900, the system also includes a disruption prediction model as depicted in FIG. 10. In the prediction mode, disruptions are predicted based on historical data along with impact analysis and mitigations plans. In an exemplary embodiment, based on historical data, the expected number of workers turning up to work can be predicted to be lower by a historically consistent amount during a holiday season. Similarly, delays in trucks can also be predicted to be high due to traffic or congestion during a specified season. The disruption management system automatically induces predicted disruptions as shown at 1020 and 1030 based on tasks 910 and provides an early warning to the operator/supervisor with impact analysis and potential mitigations. In the exemplary embodiment, the prediction model indicates that task 2 will not be completed as scheduled and that task 3 will be delayed by four hours on a future date. This information gives the supervisor the ability to preemptively reschedule labor or transportation or to reorganize tasks as deemed fit.

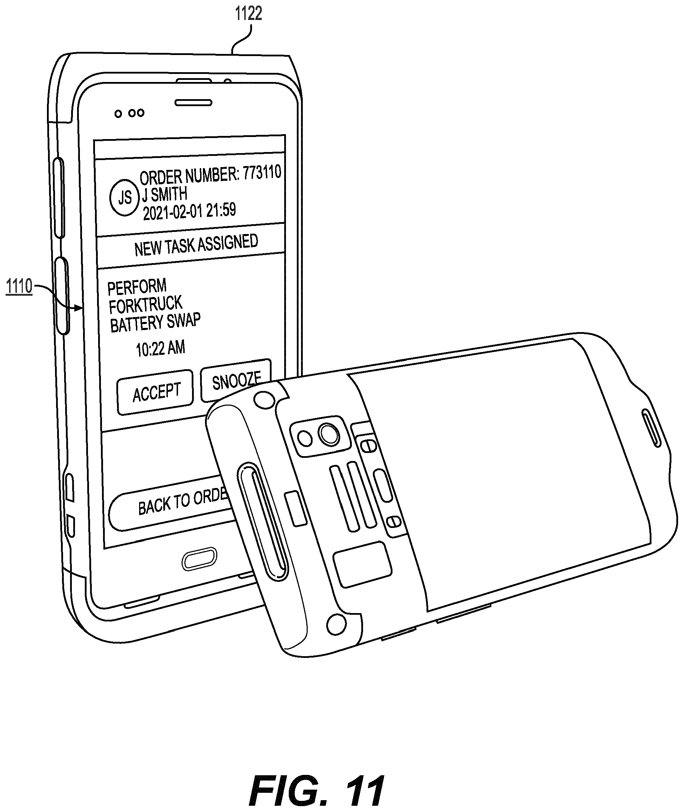

FIG. 11 depicts an example user interface 1110 for of an example computing device that receives notifications and creates tasks as described earlier. As seen, via user interface 1110 one or more tasks can be assigned, created, and/or otherwise communicated to one or more users (e.g., crew member). Such notifications related to a newly assigned task or feedback related to an already-assigned task can include information controls for users to accept, snooze, and/or otherwise interact with a respective task (e.g., propose or execute modifications to a task, work plan, and/or the like). Specifically, user interface 1110 can be used to generate real-time task instructions for employees (e.g., crew members) or any related user based on operations feedback, including human and analytics feedback related to one or more work sites. As can be seen, interface 610 can include automatically and/or manually generating tasks with task-related information, such as a template(s) for task creation, a work site location (e.g., zone, 1, zone 2, etc.), a worker pulldown menu (e.g., team 1, team 2, individual 1, individual 2, etc.), and a priority pulldown menu (e.g., move to top, objective categorizing of a task such as urgent, non-urgent, etc.). In some aspects, user interface 610 can be used to oversee worker execution of a work-related plan (e.g., daily plan, a weekly plan, a monthly plan, a quarterly plan, etc.) so as to encourage and remain present to advise and address issues that prevent employees from completing tasks. In some aspects, user interface 1110 is used to optimize workplace performance by automatically assigning and/or scheduling the appropriate tasks for the appropriate employee at the appropriate time (e.g., based on one or more relationships determined as between detected criteria such as employee skills, availability, experience, history, and/or the like).

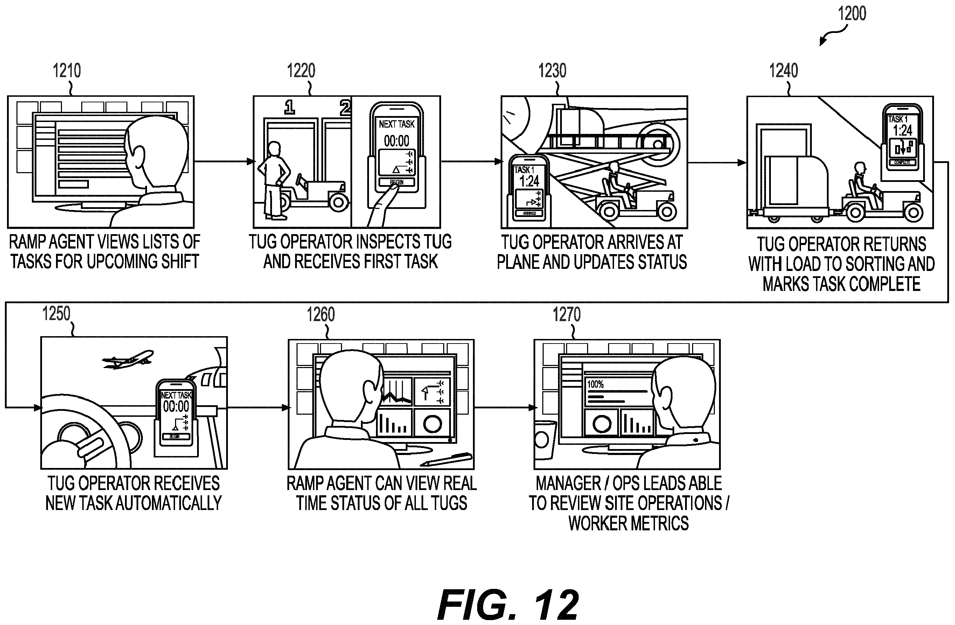

FIG. 12 is a flowchart illustrating a method 1200 for managing unplanned tasks (e.g., tasks of job site(s), area(s) of job site(s), employee(s), group(s) of employees, etc.). In step 1210, the method can include viewing, by employee user (e.g., a ramp agent) a list of tasks for a shift (e.g., an upcoming shift). In step 1220, the method can include presenting an assigned first task to the user, the assigned task being unexpected (e.g., a tug operator employee can be inspecting a tug and then receive a first task). In step 1230, the method can include the employee completing a first subtask (e.g., arriving to a job site associated with the assigned task) and updating status of the assigned task based on a status of the first subtask (e.g., the employee has arrived to the job site). In some aspects, the tug operator employee can arrive to an airplane (e.g., the job site) and the status of the first subtask can be that the tug operator employee has arrived to the airplane. The status can be automatically updated and/or communicated based on information the employee detected or tracked from the computing device of the employee (e.g., GPS data automatically transmitted from a location tracker of the computing device of the employee). In some aspects, the status can be manually updated and/or communicated (e.g., the employee can manually enter into a computing device that she has arrived to the job site).

In step 1240, the method can include the employee completing a second subtask (e.g., arriving to a second job site associated with the assigned task) and updating status of the assigned task based on a status of the second subtask (e.g., the employee has arrived to the second job site to sort). In some aspects, the tug operator employ can return with a load from the first job site and the status of the second subtask can be that the tug operator employee has returned from the airplane with the load for sorting or that that the load has already been sorted. The status of the second subtask can be automatically updated and/or communicated based on data of the computing device of the employee and/or any items associated with the second subtask (e.g., GPS data automatically transmitted from the computing device of the employee, tracking information of any items associated with the second subtask, etc.). In some aspects, the status can be manually updated and/or communicated (e.g., the employee can manually enter into a computing device that she has returned, that the load has been sorted, etc.). In some aspects, task updates can be semi-automated and/or automated based on input from one or more feedback mechanisms such as voice input, scanning, device usage, network activity, location-based events, visual recognition events, etc.

In some aspects, completion of the first and second subtasks can automatically mark the assigned task as being completed. In this respect, in step 1250, the method can include upon completion of the first assigned task, automatically assigning a second assigned task to the employee (e.g., the tug operator employee receives a new task since the aforementioned load has been retrieved from the airplane, sorted, and returned).

In step 1260, the method can include viewing, by a second employee (e.g., an employee other than the tug operator such as a ramp agent), a real-time status of all other employees of a team associated with the first employee (e.g., other tug operators of the first tug operator's team).

In step 1270, the method can include reviewing, by a third employee (e.g., an employee who is a manager or OPS lead other than the tug operators), a real-time status of all task operations of the job site and employee task performance metrics.

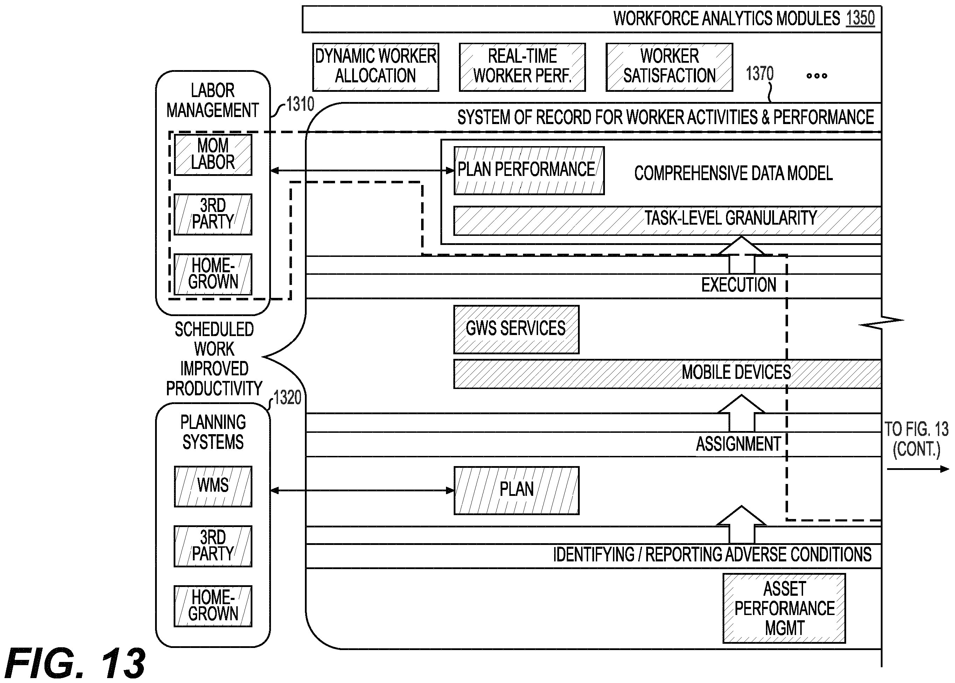

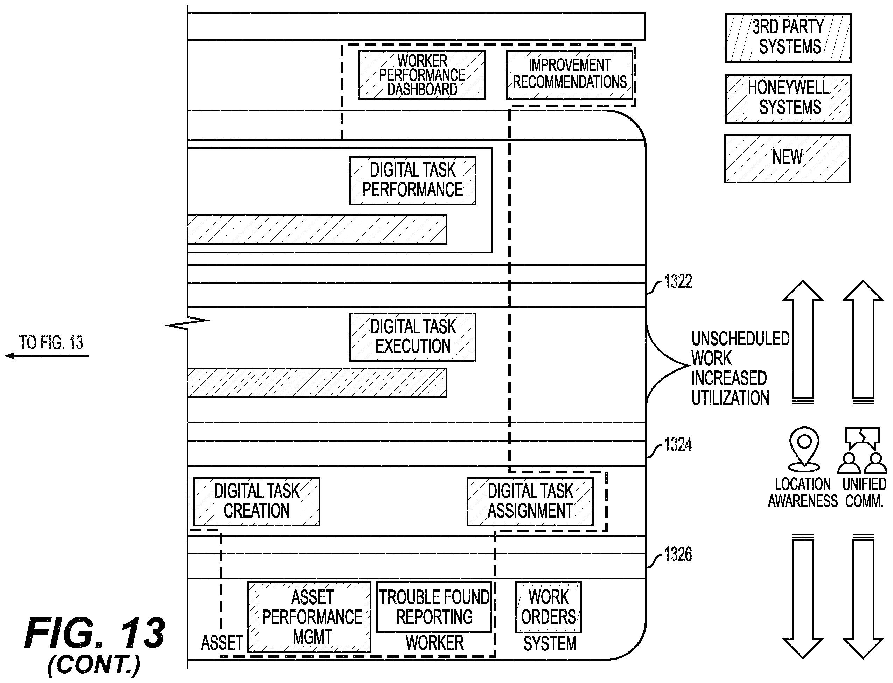

FIG. 13 is a diagram of architecture associated with of a connected warehouse system 1300 of this disclosure. System 1300 can include workforce analytic modules 1315, including but not limited to modules for dynamic work allocation, real-time worker performance metrics, worker satisfaction, etc. Workforce analytic modules 1315 can also include one or more worker performance dashboards 1323 and improvement recommendations 1325. Improvement recommendations 1325 can be for training, rewarding, coaching, engagement, etc. opportunities to maximize worker retention, performance, and overall work operations

In certain aspects, worker performance dashboards 1323 and improvement recommendations 1325 can be updated (e.g., in real-time) by a system 1317 of record for worker activities and performance. System 1317 can be in communication with workforce analytic modules 1315. System 1317 can improve schedule worked productivity via labor management module 1310 and planning systems module 1320. Specifically, management module 1310 can include one or more discrete components (e.g., components to manage manufacturing operations management (MOM) labor, 3rd party activities, as well as homegrown activities) that in real-time communicate with a comprehensive data model of system 1317. The comprehensive data model of system 1317 can include a plan performance module bi-directionally coupled to labor management module 1310. The comprehensive data model of system 1317 can also include modules with digital task performance and task-level granularity. In some aspects, the plan performance module can include a database of worker digital task performance and task-level granularity (e.g., showing discrete subtasks of a task or granular performance metrics of a respective worker task).

In practice, a layer 1326 for identifying and reporting adverse conditions can be included in system 1317. Layer 1326 can include an asset performance manager (APM) as well as systems to manage worker orders. In some aspects, layer 1326 can include an operation intel manager and trouble-found reporting system that collectively work to enable layer 1326 to communicate with aspects of assignment layer 1324 downstream thereof. Layer 1326 can include a plan system in bi-directionally coupled to planning systems module 1320, including but not limited to warehouse management systems (WMS), third party systems, and the like. The operation intel manager and trouble-found of assignment layer 1326 can communicate with digital task creation and digital task assignment systems of assignment layer 1324. Assignment layer 1324 in turn can communicate with aspects of execution layer 1322 downstream thereof.

Layer 1322 can include or be coupled to one or more mobile devices (e.g., mobile devices of users and/or personnel associated therewith including employees, managers, and personnel of third parties). Layer 1322 can also include guided work software (GWS) systems. In some aspects, the digital task creation and digital task assignment systems of assignment layer 1324 can be in communication with the mobile devices of layer 1322 as well as a digital task execution system of layer 1322. In some examples, mobile devices of layer 1322 as well as a digital task execution system of layer 1322 can communicate with the task level granularity system, the plan performance system, and digital task performance system of the comprehensive data model of system 1317 to dynamically update worker performance dashboard 1323 and improvement recommendations 1325.

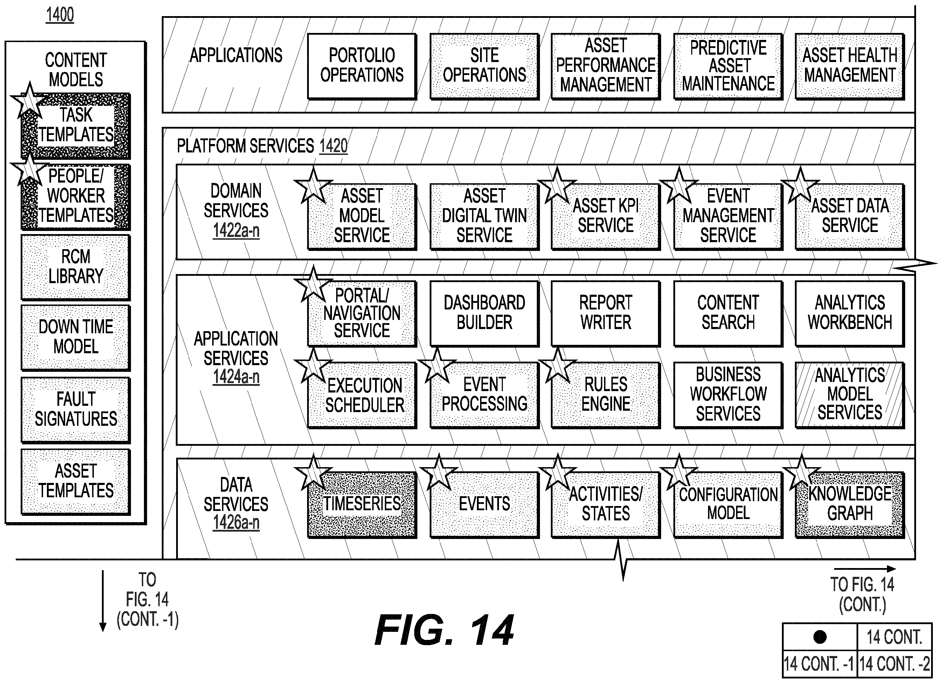

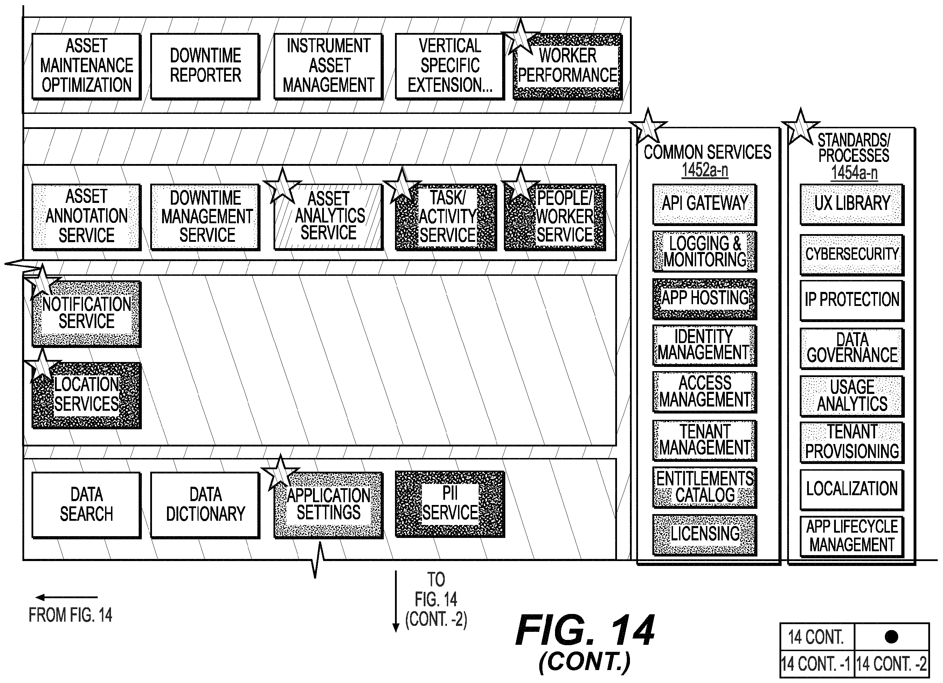

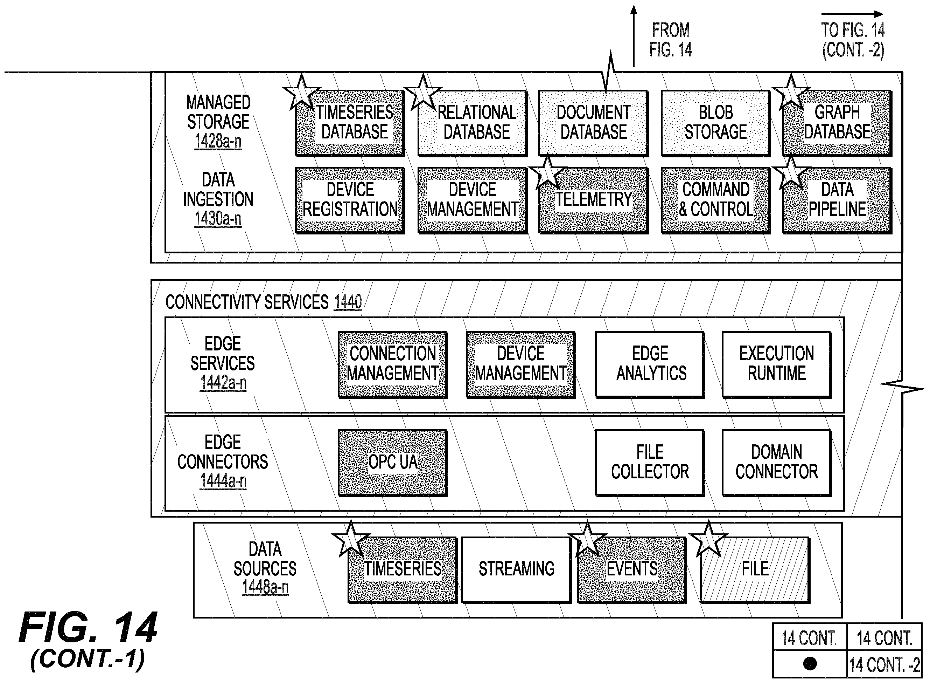

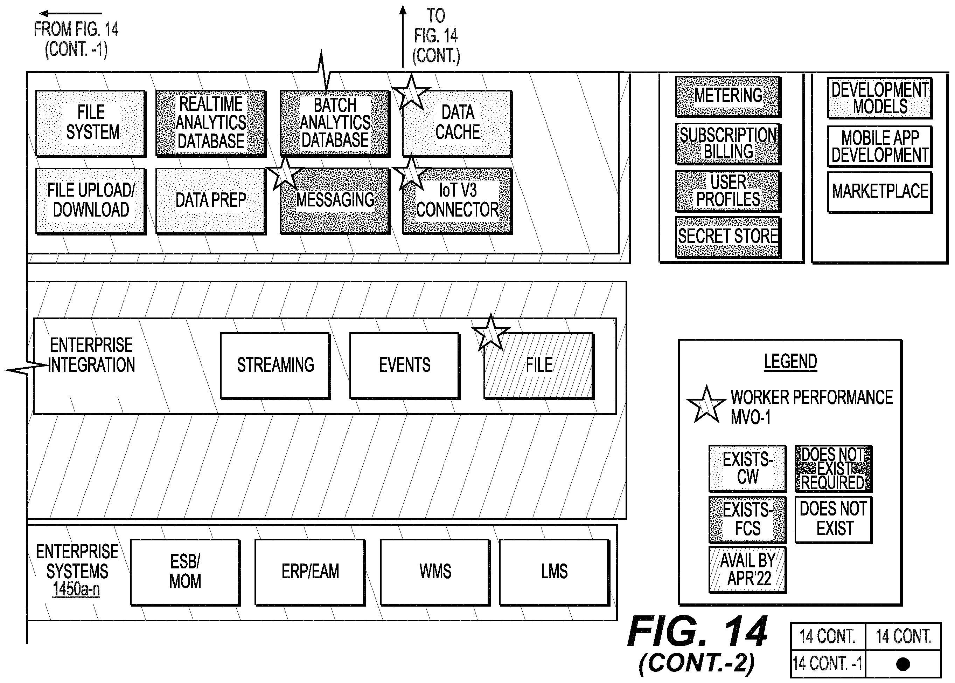

FIG. 14 is a diagram of architecture of a connected warehouse system 1400 of this disclosure. System 1400 can be a multi-layered system including an applications layer 1410, a platform services layer 1420, a common services layer 1452a - n, a standards and processes layer 1454a-n, a connectivity services layer 1440, a data sources layer 1448a-n, and an enterprise systems layer 1450a-n.

Applications layer 1410 can include a plurality of components such as applications for portfolio operations, site operations, asset performance management, predictive asset maintenance, asset health management, asset maintenance optimization, downtime reporter, instrument asset management, vertical specific extension, and worker performance.

Platform services layer 1420 can be in communication with applications layer 1410 and include a plurality of system components, including domain services 1422a-n, application services 1424a-n, data services 1426a-n, managed storage 1428a-n, and data ingestion 1430a-n. Domain services 1422a-n can include modules and/or components for asset model service, asset digital service, asset key performance indicator (KPI) service, event management service, asset data service, asset annotation service, downtime management service, asset analytics service, task / activity service, and people worker service. Preferably, domain services 1422a-n includes asset analytics service systems, task / activity service systems, and people worker service systems.

Application services 1424a-n can include modules and/or components for portal navigation service, dashboard builder, report writer, content search, analytics workbench, notification service, execution scheduler, event processing, rules engine, business workflow services, analytics model services, and location services. Some or all of components of application services 1424a-n can be in communication with applications of layer 1410.

Data services 1426a-n can include modules and/or components for time series, events, activities and states, configuration model, knowledge graph, data search, data dictionary, application settings, and personal identifying information (PII) services. Managed storage services 1428a-n can include databases for time series, relational, document, blob storage, graph databases, file systems, real-time analytics databases, batch analytics databases, and data caches. Managed storage services 1430a-n can include modules and/or components for device registration, device management, telemetry, command and control, data pipeline, file upload / download, data prep, messaging, and IoT V3 connector.

Connectivity services layer 1440 can include edge services 1442a-n, edge connectors 1444a-n, and enterprise integration 1446a-n. Edge services 1442a-n can include modules and/or components for connection management, device management, edge analytics, and execution runtime. Edge connectors 1444a-n can include OPC unified architecture (OPC UA), file collectors, and domain connectors. Enterprise integration 1446a-n can include modules and/or components for streaming, events, and/or files. Data sources layer 1448a-n can include modules and/or components for streaming, events, and/or files, as well as time series.

In some aspects, common services 1452a-n can include one or more API gateways as well as components for logging and monitoring, application hosting, identify management, access management, tenant management, entitlements catalogues, licensing, metering, subscription billing, user profiles, and/or secret store.

In some aspects, standards and processes 1454a-n can include one or more UX libraries as well as components for cybersecurity, IP protection, data governance, usage analytics, tenant provisioning, localization, app lifecycle management, deployment models, mobile app development, and/or marketplace.

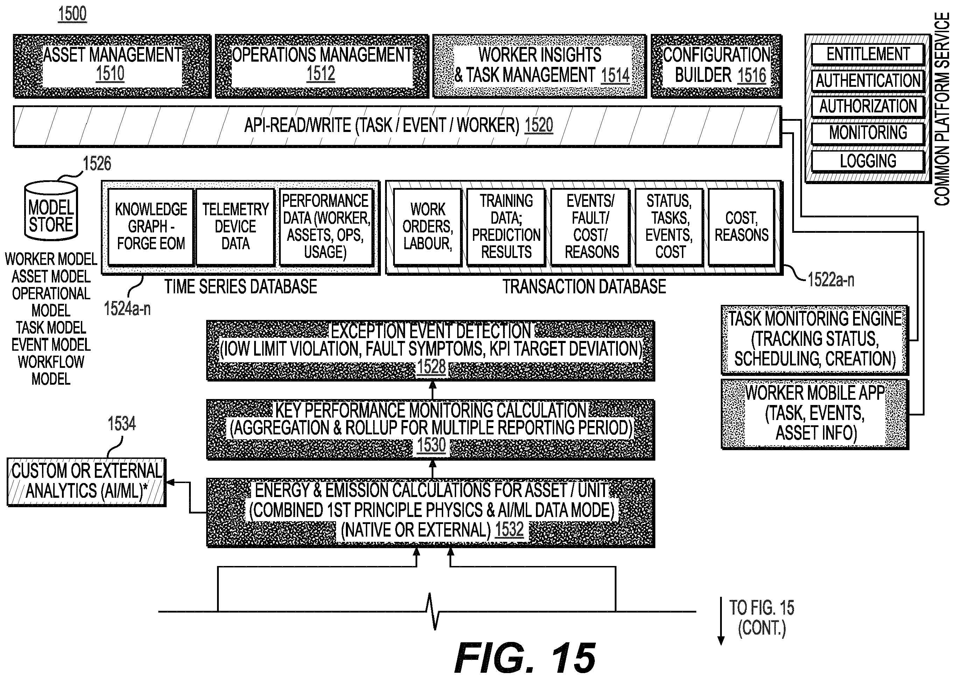

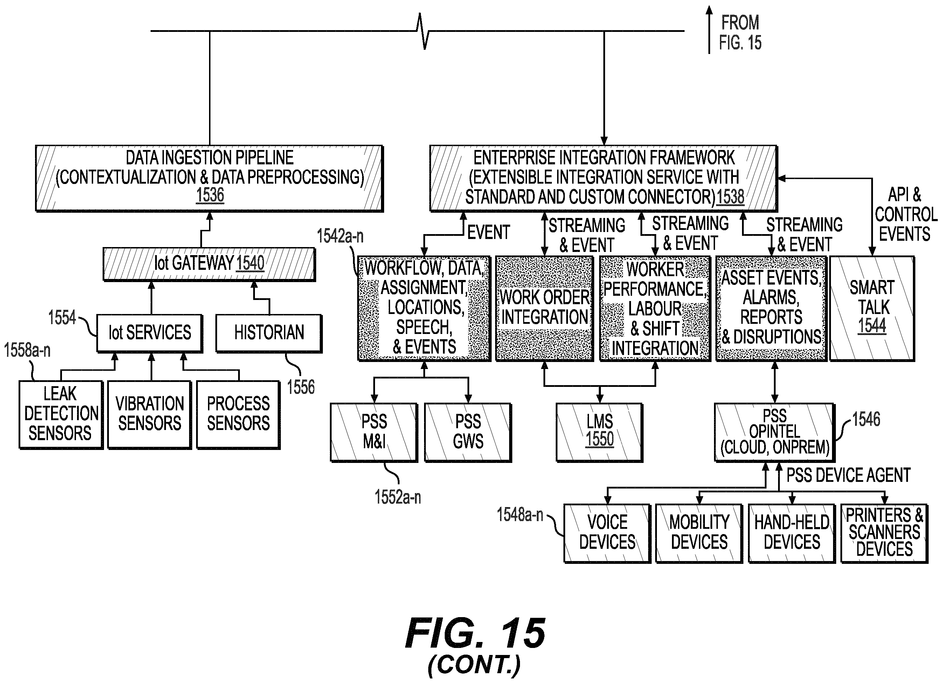

FIG. 15 depicts a schematic block diagram of a framework of a platform of a connected warehouse system 1500. System 1500 can include an asset management system 1510, operations management system 1512, worker insights and task management system 1514, and configuration builder system 1516. Each of systems 1510, 1512, 1514, and 1516 can be in communication with API 1520, whereby API 1520 can be configured to read/write tasks, events, and otherwise coordinate working with workers of system 1500. API 1520 can include a task monitoring engine configured to track status, schedule, and facilitate task creation. API 1520 can present or otherwise be accessed via a worker mobile application (e.g., a graphical user interview on a computing device) to similarly present and manage operations related to tasks, events, and asset information.

API 1520 can be communication with model store 1526 whereby model store 1526 can include models such as worker models, asset models, operational models, task models, event models, workflow models, and the like. API 1520 can be communication with time series databases 1524a-n and transaction databases 1522a-n. Time series databases 1524a-n can include knowledge databases, graph databases, as well as extensible object models (EOMs). Transaction databases 1522a-n can include components and/or modules for work orders, labor, training data, prediction results, events, fault, costs, reasons, status, tasks, events, and reasons.

Each of databases 1524a-n, 1522a-n can be in communication with analytics model 1534, which can be a machine learning model to effectively process, analyze, and classify operations of system 1500. Model 1534 can be a trained machine learning system having been trained using a learned set of parameters to predict one or more learned performance parameters of system 1500. Learned parameters can include but are not limited to predictive asset maintenance of a connected warehouse, asset health management, asset maintenance optimization, worker downtime reporter, instrument asset management, vertical specific extension, and worker performance. One or more corrective actions can be taken in response to predictions rendered by model 1534. Model 1534 can be trained with a regression loss (e.g., mean squared error loss, Huber loss, etc.) and for binary index values it may be trained with a classification loss (e.g., hinge, log loss, etc.). Machine learning systems that may be trained include, but are not limited to convolutional neural network (CNN) trained directly with the appropriate loss function, CNN with layers with the appropriate loss function, capsule network with the appropriate loss function, Transformer network with the appropriate loss function, Multiple instance learning with a CNN (for a binary resistance index value), multiple instance regression with a CNN (for a continuous resistance index value), etc.

In certain aspects, databases 1524a-n and 1522a-n can operate together to perform exception event detection 1528. Exception event detection 1528 can utilize data from one or more data sources to detect low limit violations, fault symptoms, KPI target deviations, etc. In certain aspects of exception event detection 1528, a data ingestion pipeline 1536 and enterprise integration framework 1538 can exchange information for energy and emission calculations per asset / units of system 1500. Pipeline 1536 can utilize contextual data and data preprocessing while framework 1538 can include extensible integration service with standard and customer connectors.

In certain aspects, an IoT gateway 1540 can be communicatively coupled to pipeline 1536. IoT gateway 1540 can be communicatively coupled to IoT devices 1554 such as sensors 1558a-n, including leak detection sensors, vibration sensors, process sensors, and/or the like. IoT gateway 1540 can also be in communication with data historian 1556 including historical data related to the warehouse.

Framework 1538 can be in communication with event manager modules 1542a-n, including workflow module, work order integration module, worker performance module, asset event module, and the like. For events, the workflow module can be configured to bidirectionally communicate with framework 1538 and components of process workflow data 1552a-n, including Process Safety Suite (PSS) maintenance and inspection (M&I) and PSS GWS. For event streaming, work order integration module and worker performance module can both be configured to bidirectionally communicate with framework 1538 and labor management systems (LMS) 1550. In some aspects, for event streaming asset event module can also be configured to bidirectionally communicate with PSS operational intelligence systems 1546 and framework 1538. PSS operational intelligence systems 1546 in turn can be cloud-based and/or on premises and be in bidirectional communication with devices 1548a-n, including voice devices, mobility devices, hand-held devices, printers, scanners, and/or the like. Framework 1538 can also be in communication with start talk module 1544 for corresponding API and event control.

In aspects of system 1500, pipeline 1536 and framework 1538 work together to perform step 1532 to calculate energy and emission calculations for assets and/or associated units. Model 1534 can be used in performing step 1532 as well as other native and/or external models connected therewith, whereby step 1532 can utilize data received from pipeline 1536 and framework 1538.

Upon completing step 1532, key performance monitoring calculations can be performed in step 1530. Step 1530 can be performed based on energy and emission calculations from step 1532 by aggregating and rollup across one or multiple reporting periods. Upon performing step 1530, the aforementioned event exception detection step 1528 can be performed to detect exception events. In some aspects, step 1528 can be performed based on the key performance monitoring calculations of step 1530.

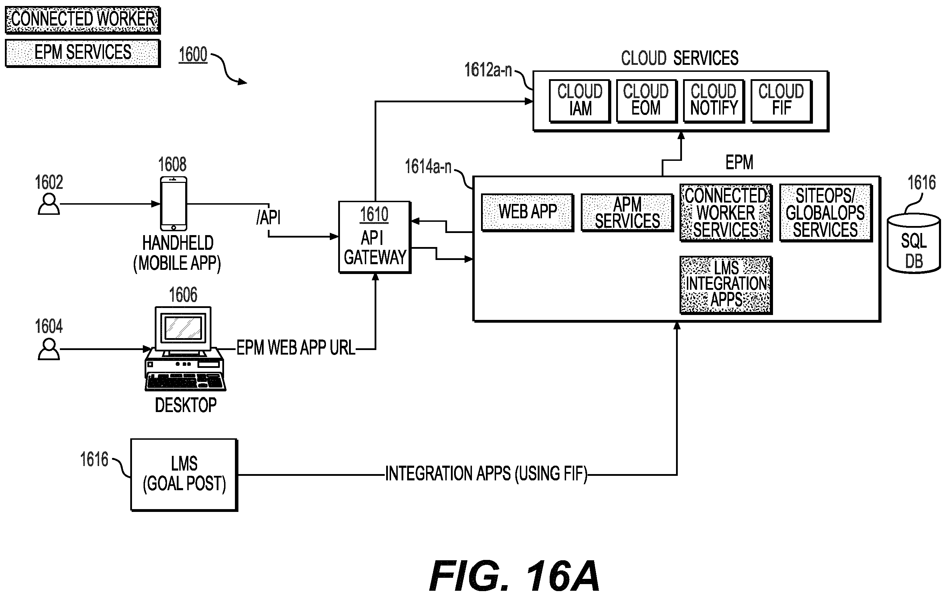

FIG. 16A is a diagram of data flow 1600 of a connected warehouse system, including one with connective workers and performance management (EPM) service systems. In FIG. 16A depicts an exemplary diagram of a data flow 1600, according to one or more embodiments. In step 1604, an operator and/or engineer may use a computing device 1606 to manage system performance through a user interface (e.g., a web-based or browser-based application) using system gateway 1610, which can be a cloud based. In step 1602, a user (e.g., worker, manager, and/or the like) may use an app in a computing device 1608 (e.g., mobile device such as a tablet or smart phone or any personal computing device) via an API to communicate and exchange data with gateway 1610.

Warehouse system services 1612a-n can be configured in communication with gateway 1610 (e.g., receive data from gateway 1610 from steps 1602 and 1604). Services 1612an can be configurable to communicate and/or update in real-time functions such as identify and access management (IAM), system extensible object model (EOM), notifications, fire and gas instrumented function (FIF), etc. Performance management system 1614a-n can be configured to transmit data to warehouse system services 1612a-n while receiving data from LMS 1616. Based on said data from LMS 1616, real-time adjustments can be determined for a labor management plan associated with the warehouse and/or workers. In some aspects, the labor management plan can be updated by system 1614a-n being in bidirectional communication with gateway 1610. System 1614a-n can include or otherwise be in communication with corresponding web apps, asset performance management (APM) services, connected worker services, LMS integration applications, site operation services, and global operation services. System 1614a-n can be connected to one or more cloud-based databases (e.g., SQL DB 1616). One or more components of system 1614a-n can be part of computing devices and/or sensors associated with workers connected to the system.

LMS 1616 can be configured to control labor costs, track performance, and predict one or more parameters associated with performance (e.g., project fulfillment execution) and transmit and/or otherwise present such information in LMS system integration applications (e.g., using FIF). In turn, system 1614a-n can configured to consume data from LMS 1616, gateway 1610, devices 1608 and 1606, and services 1612a-n to deliver one or more inferences to end users (e.g., one or more actions that the end-user can take or a corresponding employee or employees associated with one or more tasks) to result in changing a warehouse operation, such as warehouse operation savings. Warehouse operation savings can be directed towards safety, maintenance, performance, resource conservation, deliverable management, inventory management, etc.). An actionable update (e.g., a sync) may then be made to data flow 1600.

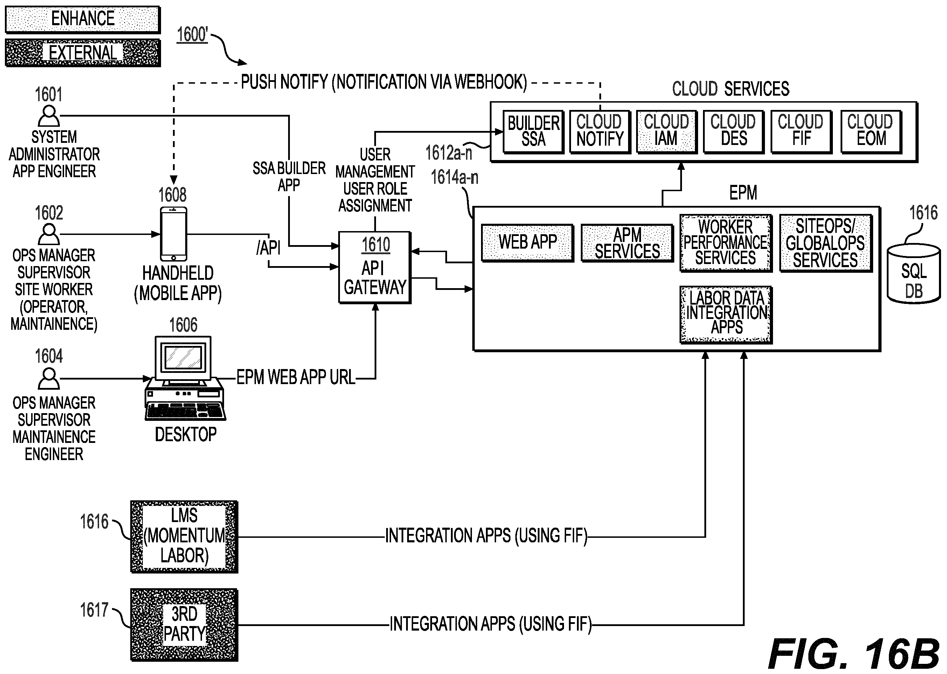

FIG. 16B is a diagram of data flow 1600' of a connected warehouse system. In addition to previous steps 1602 and 1604, data flow 1600' provides step 1601 in which a system administrator and/or application engineer may manage system performance through a user interface (e.g., a web-based or browser-based application) using system gateway 1610, which can be a cloud based. In data flow 1600', one or more services of services 1612a-n (e.g., such as the notifications module) can push messages or otherwise push notify (e.g., notification via webhook) from services 1612a-n to device 1608. In some aspects, data flow 1600' provides that performance management system 1614a-n can receive data from LMS 1616 and one or more third party systems 1617. Based on said data from LMS 1616 and one or more third party systems 1617, real-time adjustments can be determined for a labor management plan associated with the warehouse and/or workers. In some aspects of data flow 1600', the labor management plan can be updated by system 1614a-n being in bidirectional communication with gateway 1610.

Aspects of FIGs. 1-16B are advantageous for measuring Worker assignment/task progress in contextually relevant dimensions, visualize in real-time, and alert users (e.g., supervisor(s) and/or stakeholder(s)) upon identified anomlous trend deviations from rates of worker KPIs.

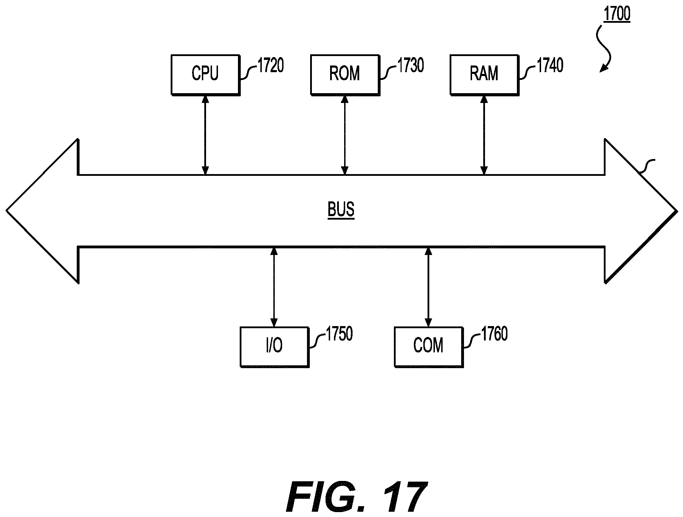

Various embodiments of the present disclosure (e.g., edge systems, gateway systems, operations centers, remote systems, warehouse systems, connected worker systems, etc.), as described above with reference to FIGs. 1-16C may be implemented using device 1700 in FIG. 17. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 17, device 1700 may include a central processing unit (CPU) 1720. CPU 1720 may be any type of processor device including, for example, any type of special purpose or a general purpose microprocessor device. As will be appreciated by persons skilled in the relevant art, CPU 1720 also may be a single processor in a multi-core/multiprocessor system, such system operating alone, or in a cluster of computing devices operating in a cluster or server farm. CPU 1720 may be connected to a data communication infrastructure 1710, for example, a bus, message queue, network, or multi-core message-passing scheme.

Device 1700 may also include a main memory 1740, for example, random access memory (RAM), and may also include a secondary memory 1730. Secondary memory 1730, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 1730 may include other similar means for allowing computer programs or other instructions to be loaded into device 1700. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 1700.

Device 1700 may also include a communications interface ("COM") 1760. Communications interface 1760 allows software and data to be transferred between device 1700 and external devices. Communications interface 1760 may include a modem, a network interface (such as an Ethernet card), a communications port, a PCMCIA slot and card, or the like. Software and data transferred via communications interface 1760 may be in the form of signals, which may be electronic, electromagnetic, optical, or other signals capable of being received by communications interface 1760. These signals may be provided to communications interface 1760 via a communications path of device 1700, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 1700 also may include input and output ports 1750 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems and methods of this disclosure can be cloud-based, multi-tenant solutions configured to deliver optimized work instructions tailored for specific vertical workflows utilizing an easy to deploy, scalable, and configurable data model and software suite to deliver performance insights and improve worker productivity.

The disclosure provides one or more user interface systems for smart worker performance scoring and evaluation of a job site (e.g., one or more warehouses), whereby information from sensors and/or connected worker computing devices may provide dynamic data about job performance (e.g., productivity of worker(s), task productivity, production productivity, etc.), a processor and database(s) for receiving and processing the dynamic data, and having a program that aggregates and analyzes the dynamic data for one or more categories of the one or more worker performance. The data analysis may determine performance scores for each of the one or more performance categories, and calculate an overall worker performance score. The worker performance score for each category of this disclosure may be displayed on a dashboard and/or related scorecards. In some aspects, one or more functions are used to calculate scores (e.g., assigning a coefficient factor to values of categories such as time on task, time between tasks, number of tasks completed, idle state, etc.). The coefficient factor may be determined from a comparison value based on some predetermined standard and/or worker performance historical data of the one or more categories. Any of the herein disclosed dashboards and related user interfaces may present worker performance scores and related details of the dynamic data for detecting and solving worker performance issues (e.g., recommended corrective actions) without changing the dashboard or the monitor.

The worker performance scores of this disclosure can include numerous scores and sub-scores, including performance scores, environmental scores related to the job site and/or areas of a job site (e.g., utility consumption, carbon footprint, emissions, etc.), health scores, safety scores, maintenance scores, job site asset scores, happiness scores, etc. Such scores are also advantageous for use in using trained machine learning models to predict performance impacts depending on trends of all such scores of this disclosure.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A computer implemented method of operating a connected warehouse by performing, by at least one processor, operations comprising:
connecting a gateway device with a data ingestion pipeline, the data ingestion pipeline being in communication with a plurality of worker computing devices and a plurality of sensor devices, the worker computing devices each relating to one or more workers of a plurality of workers;
retrieving a set of tasks to be completed in a predetermined period;
identifying a set of triggering events that may disrupt each task of the set of set of tasks;
when a triggering event of the set of triggering events occurs, initiating an event resolution, wherein the event resolution comprises one or more of:
sending a notification of the triggering event to at least one of the plurality of worker computing devices relating to at least one worker affected by the triggering event; and
sending the notification of the triggering event to at least one device associated with at least one supervisor affected by the triggering event.

2. The method of claim 1, further comprising tagging each task with the set of triggering events that may disrupt each task to generate a task-event correlation matrix.

3. The method of claim 2, further comprising generating an event resolution matrix that correlates each triggering event of the set of events with a respective event resolution, wherein the step of initiating an event resolution comprises referring to the event resolution matrix to determine the event resolution for the triggering event.

4. The method of claim 3, further comprising displaying the event-resolution logs and predictive model on a user interface of at least one of the plurality of worker computing devices and/or the at least one device associated with the at least one supervisor.

5. The method of claim 1, wherein the triggering event is one of a service request and an alarm.

6. The method of claim 1, further comprising:
presenting a first task of a shift on a user interface;
in response to a first change in conditions of the first task, presenting a first unexpected subtask related to the first task;
in response to progress or completing the first unexpected subtask, updating status of the first unexpected subtask and assigning a second task of the shift on a user interface;
in response to a second change in conditions of the second task, presenting a second unexpected subtask related to the second task; and
in response to progress or completing the second unexpected subtask, updating status of the second unexpected subtask.

7. The method of claim 6, further comprising: determining a real-time status of all task operations, based on status of the first and second tasks; and calculating task performance metrics based on the real-time status.

8. A computer implemented method of operating a connected warehouse by performing, by at least one processor, operations comprising: connecting a gateway device with a data ingestion pipeline, the data ingestion pipeline being in communication with a plurality of worker computing devices and a plurality of sensor devices, the worker computing devices each relating to one or more workers of a plurality of workers;
retrieving a set of tasks to be completed in a predetermined period;
retrieving a disruption data model, wherein the disruption data model is comprised of historical data correlating a plurality of disruptions with the set of tasks, and an impact assessment of each of the plurality of disruptions for each task of the set of tasks;
retrieving a cost model comprised of a cost assessment of each of the plurality of disruptions for each task of the set of tasks;
when a disruption of one of the plurality of disruptions occurs, generating a mitigation response based on the disruption data model and cost model; wherein the mitigation response comprises at least one of:
sending a notification of the mitigation response to at least one of the plurality of worker computing devices relating to at least one worker affected by the disruption; and
sending the notification of the mitigation response to at least one device associated with at least one supervisor affected by the disruption.

9. The method of claim 8, wherein the mitigation response is determined by a machine learning model and includes inputs comprising: a value representing the cost impact as determined by the cost assessment of the cost model; and a value representing a criticality of the task.

10. The method of claim 8, wherein the disruption data model assesses a likelihood of each of the plurality of disruptions, and, if the likelihood of at least one of the plurality of disruptions is above a threshold amount, sends to at least one of the plurality of worker computing devices or to at least one device associated with at least one supervisor a notification of potential disruption.

11. The method of claim 10, wherein the notification of potential disruption includes an impact analysis of the potential disruption and a mitigation response for the potential disruption.

12. The method of claim 11, wherein the mitigation response for the potential disruption is determined by inducing the potential disruption in the disruption data model.

13. A non-transitory computer readable medium storing instructions that, when executed by one or more processors, cause the one or more processors to perform a method of operating a connected warehouse comprising:
connecting a gateway device with a data ingestion pipeline, the data ingestion pipeline being in communication with a plurality of worker computing devices and a plurality of sensor devices, the worker computing devices each relating to one or more workers of a plurality of workers;
retrieving a set of tasks to be completed in a predetermined period,
identifying a set of triggering events that may disrupt each task of the set of set of tasks
when a triggering event of the set of triggering events occurs, initiating an event resolution, wherein the event resolution comprises one or more of:
sending a notification of the triggering event to at least one of the plurality of worker computing devices relating to at least one worker affected by the triggering event; and
sending the notification of the triggering event to at least one device associated with at least one supervisor affected by the triggering event.

14. The non-transitory computer readable medium of claim 13, further comprising tagging each task with the set of triggering events that may disrupt each task to generate a task-event correlation matrix.

15. The non-transitory computer readable medium of claim 14, further comprising generating an event resolution matrix that correlates each triggering event of the set of events with a respective event resolution, wherein the step of initiating an event resolution comprises referring to the event resolution matrix to determine the event resolution for the triggering event.
